# EUROPÄISCHE PATENTSCHRIFT

(11) **EP 1 042 965 B1**
(45) Veröffentlichungstag und Bekanntmachung des Hinweises auf die Patenterteilung: **18.08.2004**
(21) Anmeldenummer: 00107475.6
(22) Anmeldetag: 06.04.2000
(51) Int. Cl.: A23L 3/015, A23L 3/3418, A23B 4/16

(54) **Verfahren und Vorrichtung zur Behandlung von Lebensmitteln**
Method and apparatus for the treatment of food products
Procédé et dispositif pour le traitement des produits alimentaires

(30) Priorität: 08.04.1999 DE 19915883
(43) Veröffentlichungstag der Anmeldung: 11.10.2000
(73) Patentinhaber: SOLICH GESELLSCHAFT m.b.H, A-1140 Wien (AT)
(72) Erfinder: Solich, Karl, 1140 Wien (AT); Mair, Herbert, 4800 Attnang-Puchheim (AT)
(74) Vertreter: von Bülow, Tam, Dr.

(56) Entgegenhaltungen:
- EP-A- 0 755 625
- EP-B- 0 516 788
- WO-A-92/18011
- WO-A-95/10944
- GB-A- 1 446 996
- US-A- 4 992 287
- US-A- 5 458 901

## Beschreibung

Die vorliegende Erfindung betrifft ein Verfahren zur Behandlung von Lebensmitteln gemäß dem Oberbegriff des Patentanspruches 1.

Ein derartiges Verfahren ist aus der EP 0 516 788 B1 bekannt. Dort werden zu behandelnde Fleisch- bzw. Wurstwaren in einen luftdicht verschließbaren Schrank eingebracht. Anschließend wird der Innenraum des Schranks etwa zwei Stunden lang evakuiert, wodurch ein Unterdruck von ca. 0,99 bar erreicht wird. In einer sich daran anschließenden etwa 8-stündigen Druckaufbauphase wird im Schrank eine Sauerstoffatmosphäre mit einem Reinheitsgrad von wenigstens 50 % und einem Druck am Ende der Aufbauphase von etwa 1,8 bar aufgebaut. In einer dritten Phase wird dieser Zustand ca. 14 Stunden gehalten, wodurch sich ein insgesamt etwa 24 Stunden dauernder Zyklus ergibt, der bei Schweinefleisch ca. dreimal und bei Rindfleisch ca. sechs- oder siebenmal wiederholt wird. Mit diesem Verfahren soll die Haltbarkeit des Fleischs erhöht und ein längerer Frischezustand erreicht werden, der sich in einer intensiv roten Fleischfarbe äußert.

Die US-A-5 458 901 beschreibt ein Verfahren zum Sterilisieren von Fleisch, bei dem das Fleisch in einen luftdicht verschließbaren Behälter eingebracht wird, nach dem Verschließen des Behälters Luft abgesaugt und anschließend CO₂-Gas unter Druck in den Behälter eingebracht wird. Dieser Druck wird für eine vorbestimmte Zeitdauer gehalten, bis das CO₂-Gas vollständig in das Fleisch eingedrungen ist. Anschließend wird der Druck des CO₂-Gases rasch abgebaut, vorzugsweise durch eine Pumpe, die einen Unterdruck erzeugt. Dieser Zyklus kann mehrfach wiederholt werden. Zur Durchführung dieses Verfahrens wird ein verschließbarer Behälter vorgesehen, der über ein erstes Absperrventil mit einer Evakuierungspumpe und über ein zweites Absperrventil mit einer Gasversorgungseinrichtung verbunden ist. Über einen Druckregler kann der Überdruck des CO₂-Gases eingestellt werden.

Die EP-A-0 755 625 beschreibt ein Verfahren zur Konservierung von Geweben und Organen, insbesondere von Transplantationsgeweben und -organen, bei dem das zu behandelnde Gewebe in gekühltem Zustand für eine vorgegebene Zeit in einem luftdicht verschließbaren Raum in einer Sauerstoffatmosphäre zwischengelagert ist. Der Druck der Sauerstoffatmosphäre liegt über Atmosphärendruck und wird während der gesamten Zwischenlagerzeit über Atmosphärendruck gehalten. Zur Durchführung dieses Verfahrens ist ebenfalls ein luftdicht verschließbarer Behälter vorgesehen, der über ein erstes Absperrventil mit einer Evakuierungspumpe und über ein zweites Absperrventil mit einer Gasversorgungseinrichtung verbunden ist. Die Ventile und die Evakuierungspumpe werden von einer Steuerungsvorrichtung angesteuert.

Aufgabe der vorliegenden Erfindung ist es, ein Verfahren zur weiteren Verbesserung der Behandlungsqualität von Lebensmitteln, insbesondere von Fleisch zu schaffen.

Diese Aufgabe wird durch die Merkmale des Patentanspruches 1 gelöst. Vorteilhafte Ausgestaltungen und Weiterbildungen sind den Unteransprüchen zu entnehmen.

Das Grundprinzip der Erfindung besteht darin, die Lebensmittel unter wechselnden Drücken einer Gasatmosphäre auszusetzen, wobei mehrere aufeinanderfolgende Druckwechselzyklen durchlaufen werden, deren Zyklusfrequenz verkürzt wird, d.h. deren Zyklusdauern verlängert werden.

Die Zyklen bestehen jeweils aus einer ersten Phase, in der allmählich ein Unterdruck erzeugt wird, einer zweiten Phase, in der allmählich ein Gas zur Behandlung der Lebensmittel zugeführt wird, wobei ein Überdruck erzeugt wird, und einer dritten Phase, in der der Überdruck gehalten wird. Das Gas kann u.a. aus Sauerstoff bestehen, der in der zweiten und dritten Phase in die Lebensmittel bzw. das Fleisch eindefundiert.

Hierdurch läßt sich eine bessere Farbstabilität erreichen, d.h. das Fleisch behält länger seine intensive natürliche Rotfärbung. Ein weiterer Vorteil besteht in der Verringerung der Keimbildung, wodurch sich die Haltbarkeit deutlich verbessert. Durch die "sanften" Druckwechsel, d. h. durch die relativ langsamen Druckabsenkungen und Druckerhöhungen, kann die bei der Fleischbehandlung auftretende Entsaftung bzw. der dadurch bedingte Gewichtsverlust auf 1 % begrenzt werden. Durch die mehrmalige Wiederholung der Behandlungszyklen wird der Reifegrad des Fleisches verbessert, d.h. vorhandene Faserverkrampfungen werden gelöst, wodurch sich die Garzeit und die Zähigkeit des Fleischs verringert. Ein weiterer Vorteil besteht darin, daß der bei Rinderoder Schweinefleisch zwar übliche aber manchmal als zu intensiv empfundene Eigengeschmack in gewissem Umfang neutralisiert wird.

Zur Durchführung des Verfahrens kann eine Vorrichtung mit einem druckdicht verschließbaren Behälter zum Einbringen der zu behandelnden Lebensmittel vorgesehen sein, wobei der Behälter einen Pneumatikanschluß zur Erzeugung eines Unter- bzw. Überdrucks im Behälter aufweist. Der Behälter ist hierzu über ein erstes Absperrventil mit einer Evakuierungspumpe und über ein zweites Absperrventil mit einer Gasversorgung verbunden. Ferner ist ein Drucksensor zur Bestimmung des im Behälter herrschenden Drucks vorgesehen.

In der ersten Phase ist das erste Ventil offen und das zweite geschlossen und die Evakuierungspumpe saugt Gas aus dem Behälter. In der zweiten Phase ist das erste Ventil geschlossen und das zweite offen, wobei Gas von der Gasversorgungseinheit in den Behälter strömt. In der dritten Phase sind beide Ventile geschlossen.

Zur Steuerung der Ventile und der Evakuierungspumpe ist eine Steuervorrichtung vorgesehen, der als Eingangssignal das vom Drucksensor gelieferte Drucksignal zugeführt wird.

Im folgenden wird die Erfindung anhand von Ausführungsbeispielen im Zusammenhang mit der Zeichnung näher erläutert. Es zeigen:
- Fig. 1: ein Ausführungsbeispiel einer Vorrichtung, die zur Durchführung des Verfahrens gemäß der Erfindung geeignet ist;
- Fig. 2: ein Prinzipschema einer Vorrichtung zur Durchführung des Verfahrens nach der Erfindung; und
- Fig. 3: ein Druck/Zeitdiagramm zur Erläuterung des erfindungsgemäßen Verfahrens.

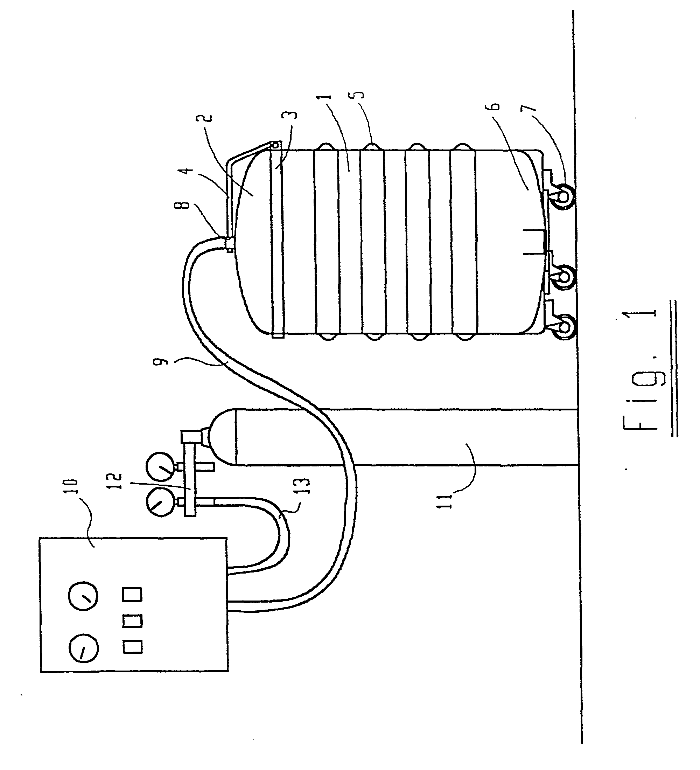

Fig. 1 zeigt einen druckdicht verschließbaren Behälter 1 zur Aufnahme von zu behandelnden Lebensmitteln. Der Behälter 1 weist einen gewölbten Deckel 2 auf, der durch einen Spannring 3 am Behälter befestigt ist. Aufgrund des im Behälter 1 herrschenden Überdrucks ist ein Sicherheitsbügel 4 vorgesehen, der ein ungewolltes Öffnen des Spannrings 3 bzw. ein Absprengen des Deckels 2 verhindert. Zur Versteifung des Behälters 1 sind umlaufende Spreizsicken 5 vorgesehen, wobei die Materialstärke im Bereich der Spreizsicken 5 dieselbe ist wie beim übrigen Behälter. Aus Festigkeitsgründen ist auch der Boden 6 des Behälters konvex gewölbt. Der Behälter 1 weist ferner Rollen 7 auf, welche ein Verschieben von Hand ermöglichen. Im Behälter ist ein Hängegestell (nicht dargestell) zum Aufhängen einzelner Fleischstücke vorgesehen. Zur Unterscheidung einzelner Behälter können Etikettenhalter vorgesehen sein.

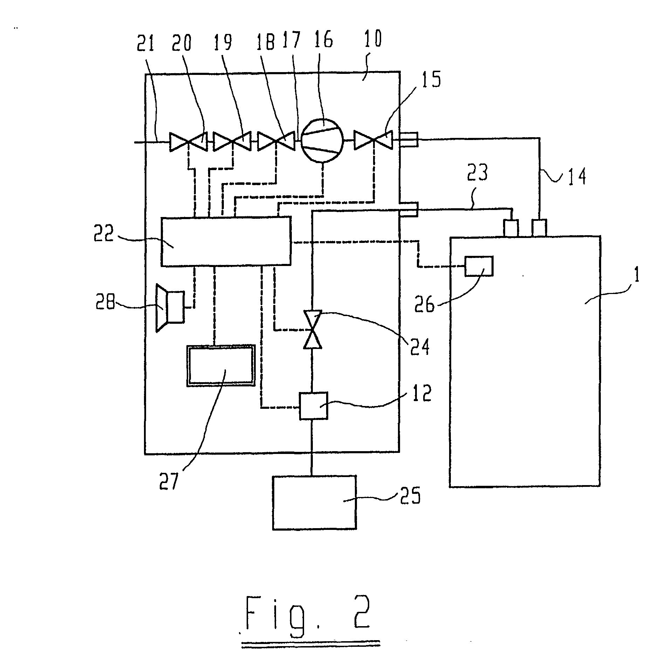

Am Deckel 2 des Behälters 1 ist ein Pneumatikanschluß 8 vorgesehen, der über ein bzw. mehrere Druckschläuche 9 mit einer Steuereinheit 10 verbunden ist (vgl. Fig. 2).

Ferner ist eine Gasflasche 11 mit einem Druckminderer 12 vorgesehen, der über eine Gasleitung 13 ebenfalls an die Steuereinheit 10 angeschlossen ist.

Fig. 2 zeigt weitere Einzelheiten der in Fig. 1 beschriebenen Vorrichtung. Vom Behälter 1 führt eine Evakuierungsleitung 14 über ein erstes Absperrventil 15 zu einer Evakuierungspumpe 16, die hier in die Steuereinheit 10 integriert ist. Von der Evakuierungspumpe 16 führt eine Pneumatikleitung 17 fort, in der hier seriell drei Ventile 18, 19 bzw. 20 mit jeweils unterschiedlichem Strömungsquerschnitt angeordnet sind. Vom Ventil 20 führt eine Entlüftungsleitung 21 in die Umgebung. Die Ventile 18-20 und das Absperrventil 15 sind hier als Magnetventile dargestellt, die von einer elektrischen Steuervorrichtung 22 gesteuert werden. Sämtliche Steuerleitungen sind dabei durch gestrichelte Linien dargestellt.

Vom Behälter 1 führt ferner eine Druckleitung 23 zu einem Absperrventil 24, das über den Druckminderer 12 mit einer hier nur schematisch dargestellten Gasversorgung 25 bzw. mit einer Gasflasche verbunden ist. Der Druckminderer kann - wie hier dargestellt - ebenfalls von der Steuervorrichtung 22 angesteuert werden. Im Behälter 1 ist ferner ein Drucksensor 26 vorgesehen, der ein dem Behälterdruck entsprechendes elektrisches Signal an die Steuervorrichtung 22 liefert.

Die Steuereinheit 10 weist hier ferner ein Display 27 auf, das zum Anzeigen verschiedener Prozeßgrößen, wie z. B. dem im Behälter herrschenden Druck, den momentanen Ventilstellungen, der Drehzahl bzw. der Förderleistung der Evakuierungspumpe 16, des Zustandes der zu behandelnden Lebensmitteln etc., vorgesehen ist. Weiter ist die Steuervorrichtung 22 mit einem akustischen Signalgeber 28 verbunden, der z. B. zum Anzeigen eines Gefahrenzustandes oder zum Signalisieren der Beendigung der Lebensmittelbehandlung vorgesehen sein kann.

Im folgenden wird die Funktionsweise der Vorrichtung näher erläutert. Zunächst werden die zu behandelnden Lebensmittel in den Behälter 1 eingebracht. Der Behälter 1 wird druckdicht mit dem Deckel 2 verschlossen und über die Evakuierungsleitung 14 und die Druckleitung 23 mit der Steuereinheit 10 verbunden. In einer ersten Phase wird dann im Behälter 1 ein Unterdruck erzeugt. In dieser Phase ist das Absperrventil 24 geschlossen, das Absperrventil 15 ist geöffnet, und die Evakuierungspumpe 16 wird durch die Steuervorrichtung 22 eingeschaltet.

Die Ventile 18-20 befinden sich jeweils in einer ersten Durchlaßstellung, wobei z. B. das Ventil 18 einen kleinen, das Ventil 19 einen mittleren und das Ventil 20 einen großen Strömungsquerschnitt aufweist. Die Evakuierungspumpe 16 saugt dabei mit gleichbleibender Förderdrehzahl Luft bzw. Gas aus dem Behälter 1 heraus und fördert dieses durch die Ventile 18-20 in die Atmosphäre. Der aus dem Behälter 1 herausgesaugte Gasvolumenstrom nimmt somit mit zunehmendem Unterdruck ab. Wird im Behälter 1 ein vorgegebener Unterdruck erreicht, so öffnet die Steuervorrichtung 22 das Ventil 18, welches den kleinsten Strömungsquerschnitt der drei Ventile 18-20 hat, so daß der effektive Strömungsquerschnitt zwischen der Evakuierungspumpe 16 und der Entlüftungsleitung 21 zunimmt, was auch zu einer Zunahme des geförderten Volumenstroms führt.

Bei einer weiteren Druckabsenkung im Behälter 1 werden dann nacheinander das Ventil 19 mit dem mittleren Strömungsquerschnitt und schließlich das Ventil 20 mit dem großen Strömungsquerschnitt geöffnet, so daß die Evakuierungspumpe 16 ungehindert Gas in die Atmosphäre pumpen kann. Durch das sequenzielle "Durchschalten" der Ventile 18-20 lassen sich selbst bei einer Evakuierungspumpe 16 mit konstanter Förderdrehzahl ein relativ gleichbleibender Fördervolumenstrom bzw. ein relativ konstanter Druckabbaugradient erreichen.

Alternativ zu einer Evakuierungspumpe mit konstanter Förderdrehzahl und den Ventilen 18-20 kann auch eine Evakuierungspumpe mit variabler Drehzahl verwendet werden, bei der der Volumenstrom durch Erhöhen der Förderdrehzahl beliebig angepaßt werden kann. Ist im Behälter ein vorgegebener Unterdruck von z.B. 50mbar erreicht, so schließt das Absperrventil 15.

In einer zweiten Phase wird dann das Absperrventil 24 geöffnet, so daß Gas aus der Gasversorgungseinrichtung 25 über den Druckminderer 12 in den Behälter 1 strömen kann. Das Absperrventil 24 bleibt solange geöffnet, bis im Behälter 1 ein vorgegebener Überdruck von z. B. 0,95 bar über dem Atmosphärendruck erreicht wird. Bei Erreichen des vorgegebenen Überdrucks schließt dann auch das Absperrventil 24.

In der dritten Phase wird dann eine gewisse Zeit gehalten und das eingeströmte Gas kann in die im Behälter 1 befindlichen Lebensmittel eindiffundieren. Anschließend wird der zuvor beschriebene "dreiphasige Zyklus" ggf. mehrmals wiederholt, d. h. das Gas wird durch die Evakuierungspumpe 16 abgesaugt und frisches Gas wird in den Behälter 1 eingebracht.

Die Steuervorrichtung 22, welche zur Steuerung der Ventile und der Evakuierungspumpe 16 vorgesehen ist, kann z. B. eine SPS-Steuerung (speicherprogrammierbare Steuerung) sein. Mit einer derartigen Steuerung und einer Evakuierungspumpe mit variabler Drehzahl lassen sich dann beliebige Druckabbau- bzw. Druckaufbaugradienten erzeugen.

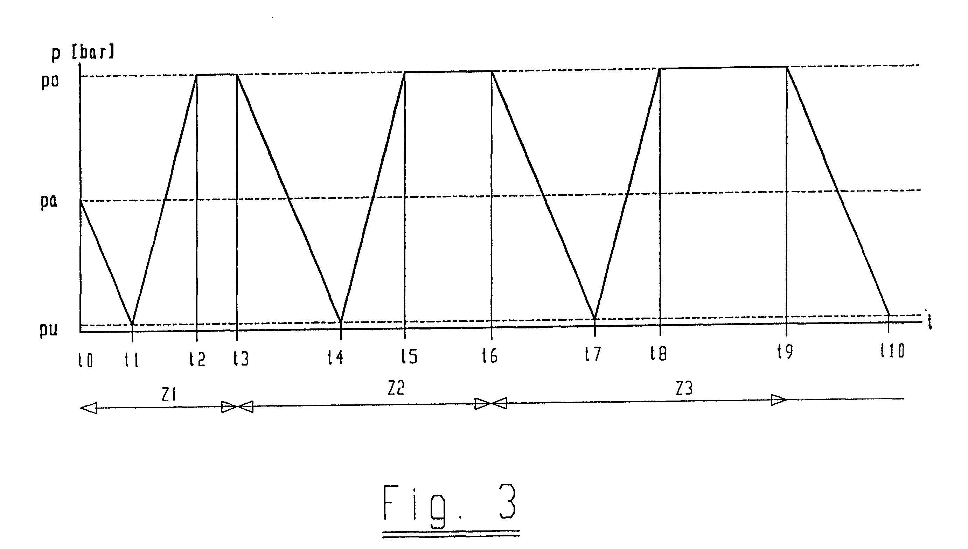

Eine schonende Behandlung von Fleisch erfordert nämlich, daß der Aufbau des Über- bzw. Unterdrucks relativ langsam erfolgt, um das Platzen von Zellmembranen im Fleisch zu verhindern, was zu einer unerwünschten hohen Entsaftung führen würde. Der Aufbau des Über- bzw. Unterdrucks kann in unterschiedlicher Weise erfolgen. Beispielsweise ist es möglich, wie oben beschrieben, einen mehrfach "gestuften" Druckverlauf vorzusehen, der durch "Durchschalten" der Ventile 18-20, d.h. durch schrittweises Vergrößern des Strömungsquerschnitts erzeugt wird. Alternativ dazu kann mit einer SPS-gesteuerten Evakuierungspumpe mit variabler Drehzahl ein beliebiger stetig differenzierbarer Druckverlauf realisiert werden, insbesondere ein linearer Druckverlauf, wie er im Zusammenhang mit Fig. 3 näher erläutert wird.

Fig. 3 zeigt ein Ausführungsbeispiel, bei dem sich der im Behälter 1 herrschende Druck linear mit der Zeit ändert. Zum Zeitpunkt t₀ wird der Behälter 1 mit Fleisch gefüllt, wobei zunächst der Atmosphärendruck pₐ herrscht. Anschließend wird der Behälter geschlossen und evakuiert, wobei der Druck auf einen Druck pᵤ abgesenkt wird, der zum Zeitpunkt t₁ erreicht wird. Anschließend strömt Gas von der Gasversorgungseinrichtung in den Behälter 1, wodurch sich im Zeitpunkt t₂ ein Überdruck bzw. ein oberes Druckniveau pₒ einstellt. Dieser Druck wird für eine Zeitdauer t₂-t₃ gehalten. Im Zeitpunkt t₃ endet der erste Zyklus Z₁ und der Vorgang beginnt von neuem mit einer Druckabsenkung bis zum Zeitpunkt t₄, einer anschließenden Druckerhöhung bis zum Zeitpunkt t₅ und einer weiteren Druckhaltephase t₅₋t₆.

An den Zyklus Z₂ schließt sich ein weiterer Zyklus Z₃ an. Gemäß der Erfindung ist vorgesehen, daß die Zyklusfrequenz der aufeinanderfolgenden Zyklen Z₁-Z₃ verringert wird. Die Verringerung der Zyklusfrequenz erfolgt durch Verlängern der Druckhaltephasen. Wie in Fig. 3 dargestellt, ist die Druckhaltephase t₂-t₃ kürzer als die Druckhaltephase t₅-t₆ und diese wiederum ist kürzer als die Druckhaltephase t₈-t₉. Zu Beginn einer Fleischbehandlung ist nämlich noch kein Gas in das Fleisch eindefundiert. Daher sind zu Beginn öfters "Gasspülungen" vorgesehen, bis eine gewisse Sättigung erreicht ist. In der Folge dienen die Druckwechsel primär der Bewegung der Fleischmuskulator bzw. der Auflösung von Faserverkrampfungen.

Zur Durchführung des Verfahrens kann auch eine Vorrichtung aus einem einfahrbaren Tunnel bestehen, wo das Fleisch mittels Hängebahn - Wagen mit Hängevorrichtung - eingebracht wird. Der Tunnel kann vorzugsweise mit einer eigenen Kühltechnik ausgestattet sein, so daß die idealen Temperaturwerte (4-6°C) einfach verfügbar sind.

Weiter ist das Handling vereinfacht, da fast in dem Metzger-/Fleischerbetrieb eine Hängerohrbahn eingesetzt wird, um das Fleisch zu befördern (für ganze Stücke oder entbeintes Fleisch auf entsprechenden Hängegestellen, wo gleich bis zu 350 kg Fleisch Platz haben).

Der Tunnel kann in verschiedenen Größen zum Einsatz kommen (1 000 bis 10 000 g eventuell sogar noch mehr). Die dazu passende Steuerung mit Vakuum- und Gasversorgung wird an die jeweilige Größenordnung angepaßt. Der Tunnel wird mit einer Beförderung für das Fleisch ausgestattet, um es einfach und problemlos einbringen und entnehmen zu können.

Ab einer gewissen Aufnahmekapazität wird die Gasversorgung mittels Gastank und Gasmischer (eventuell auch Gasflaschenbündel) erfolgen, um die störungsfreie Gasversorgung zu gewährleisten.

Um den verschärften Lebensmittelgesetzen und Hygienebestimmungen gerecht zu werden, besteht die Möglichkeit, die Verfahrensabläufe (z.B. Zeitdiagramm und Temperaturverlauf) entsprechend aufzuzeichnen und zu dokumentieren.

Bei größeren Anlagen (ab 1 000 Liter) wird das Gasgemisch beim Druckabbau direkt (vorzugsweise ins Freie) abgeleitet.

## Patentansprüche

1. Verfahren zur Behandlung von Lebensmitteln, insbesondere Fleisch, Wurst und Fisch, bei dem
a) die zu behandelnden Lebensmittel in einen druckdicht verschließbaren Behälter eingebracht werden,
b) der Behälter druckdicht verschlossen wird,
c) in einer ersten Phase im Behälter ein Unterdruck erzeugt wird,
d) in einer zweiten Phase ein Gas zur Behandlung der Lebensmittel in den Behälter eingebracht wird, wobei am Ende der zweiten Phase ein Überdruck im Behälter erreicht wird,
e) in einer dritten Phase der Überdruck gehalten wird, und
f) die Schritte c), d) und e) in Abhängigkeit von der Art der zu behandelnden Lebensmittel mehrfach wiederholt werden,
**dadurch gekennzeichnet, daß**
g) die Wiederholungsfrequenz der Schritte c), d) und e) durch Verlängern der Dauer der dritten Phase verkürzt wird.

2. Verfahren nach Anspruch 1, **dadurch gekennzeichnet, daß** die Dauer der ersten und der zweiten Phase unverändert bleibt.

3. Verfahren nach einem der Ansprüche 1 oder 2, **dadurch gekennzeichnet,**
**daß** das Verfahren über mehrere Tage durchgeführt wird, wobei die Schritte c) bis e) am ersten Tag sechsund achtmal und am letzten Tag dreimal durchgeführt werden.

4. Verfahren nach einem der Ansprüche 1 bis 3, **dadurch gekennzeichnet,**
**daß** die Unterdruckerzeugung innerhalb von drei bis zwanzig Minuten durchgeführt wird.

5. Verfahren nach einem der Ansprüche 1 bis 3, **dadurch gekennzeichnet,**
**daß** die Unterdruckerzeugung innerhalb von sieben bis zwanzig Minuten durchgeführt wird.

6. Verfahren nach einem der Ansprüche 1 bis 5, **dadurch gekennzeichnet,**
**daß** der Druckaufbau innerhalb von drei bis zehn Minuten durchgeführt wird.

7. Verfahren nach einem der Ansprüche 1 bis 6, **dadurch gekennzeichnet,**
**daß** der erste Druckaufbau und/oder die Unterdruckerzeugung jeweils mit einem konstanten Druckgradienten erfolgt.

8. Verfahren nach einem der Ansprüche 1 bis 7, **dadurch gekennzeichnet,**
**daß** der Druck auf 50 mbar abgesenkt wird.

9. Verfahren nach einem der Ansprüche 1 bis 8, **dadurch gekennzeichnet,**
**daß** der Druck auf 0,95 bar über dem Atmosphärendruck erhöht wird.

10. Verfahren nach einem der Ansprüche 1 bis 9, **dadurch gekennzeichnet,**
**daß** zwischen den Schritten c) und d) eine Phase vorgesehen ist, in der der Unterdruck konstant gehalten wird.

## Claims

1. A method of processing foodstuffs, in particular meat, sausages and fish, in which
a) the foodstuff to be processed is introduced into a pressure-tightly sealable container,
b) the container is pressure-tightly sealed,
c) in a first phase, a partial vacuum is generated within the container,
d) in a second phase, a gas for processing the foodstuff is introduced into the container, an overpressure being reached within the container at the end of the second phase,
e) in a third phase, the overpressure is maintained, and
f) steps c), d) and e) are repeated a number of times depending on the type of foodstuff to be processed,
**characterised in that**
g) the frequency in which steps c), d) and e) are repeated is decreased by increasing the duration of the third phase.

2. A method according to Claim 1, **characterised in that** the duration of the first and second phase remains unchanged.

3. A method according to any one of Claims 1 and 2, **characterised in that**
the method is carried out over a plurality of days, steps c) to e) being carried out six times and eight times on the first day, and three times on the last day.

4. A method according to any one of Claims 1 to 3, **characterised in that**
the partial-vacuum generation is effected within three to twenty minutes.

5. A method according to any one of Claims 1 to 3, **characterised in that**
the partial-vacuum generation is effected within seven to twenty minutes.

6. A method according to any one of Claims 1 to 5, **characterised in that**
the pressure build-up is effected within three to ten minutes.

7. A method according to any one of Claims 1 to 6, **characterised in that**
the first pressure build-up and/or the partial-vacuum generation occur at a constant pressure gradient in each case.

8. A method according to any one of Claims 1 to 7, **characterised in that**
the pressure is reduced to 50 mbar.

9. A method according to any one of Claims 1 to 8, **characterised in that**
the pressure is increased to 0.95 bar above atmospheric pressure.

10. A method according to any one of Claims 1 to 9, **characterised in that** a phase is provided between steps c) and d) in which the partial vacuum is kept constant.

## Revendications

1. Procédé pour le traitement des produits alimentaires, notamment la viande, la charcuterie et le poisson, dans lequel
a) on introduit les produits alimentaires à traiter dans un récipient qui peut être fermé de façon à être étanche sous pression,
b) on ferme le récipient, qui est alors étanche sous pression,
c) dans une première étape, on crée une dépression dans le récipient,
d) dans une deuxième étape, on introduit dans le récipient un gaz pour le traitement des produits alimentaires, moyennant quoi on obtient une surpression dans le récipient à la fin de la deuxième étape,
e) dans une troisième étape, on maintient la surpression, et
f) on répète plusieurs fois les étapes c), d) et e) en fonction de la nature des produits alimentaires à traiter,
**caractérisé en ce que**
g) on réduit la fréquence de répétition des étapes c), d) et e) en prolongeant la durée de la troisième étape.

2. Procédé selon la revendication 1, **caractérisé en ce que** la durée de la première et de la deuxième étapes reste inchangée.

3. Procédé selon l'une des revendications 1 ou 2, **caractérisé en ce que**
l'on exécute le procédé sur plusieurs jours, les étapes c) à e) étant exécutées six et huit fois le premier jour et trois fois le dernier jour.

4. Procédé selon l'une des revendications 1 à 3, **caractérisé en ce que**
la création de la dépression est exécutée dans un laps de temps de trois à vingt minutes.

5. Procédé selon l'une des revendications 1 à 3, **caractérisé en ce que**
la création de la dépression est exécutée dans un laps de temps de sept à vingt minutes,

6. Procédé selon l'une des revendications 1 à 5, **caractérisé en ce que**
la montée en pression est exécutée dans un laps de temps de trois à dix minutes,

7. Procédé selon l'une des revendications 1 à 6, **caractérisé en ce que**
la première montée en pression et/ou la création de la dépression s'effectuent respectivement avec un gradient de pression constant.

8. Procédé selon l'une des revendications 1 à 7, **caractérisé en ce que**
l'on réduit la pression jusqu'à 50 mbars.

9. Procédé selon l'une des revendications 1 à 8, **caractérisé en ce que**
l'on augmente la pression jusqu'à 0,95 bars au-dessus de la pression atmosphérique.

10. Procédé selon l'une des revendications 1 à 9, **caractérisé en ce que**
entre les étapes c) et d), on prévoit une étape dans laquelle la dépression est maintenue constante.
